# EUROPEAN PATENT SPECIFICATION

(11) **EP 3 351 739 B1**
(45) Date of publication and mention of the grant of the patent: **01.05.2019**
(21) Application number: 18151761.6
(22) Date of filing: 16.01.2018
(51) Int. Cl.: F01D 11/12, B22F 3/105, B23K 26/342

(54) **A SEALING ELEMENT AND A METHOD OF MANUFACTURING THE SAME**
DICHTUNGSSTRUKTUR UND VERFAHREN ZUR HERSTELLUNG DAVON
ÉLÉMENT D'ÉTANCHÉITÉ ET SON PROCÉDÉ DE FABRICATION

(30) Priority: 19.01.2017 GB 201700914
(43) Date of publication of application: 25.07.2018
(73) Proprietor: Rolls-Royce plc, London SW1E 6AT (GB)
(72) Inventor: Wright, Gary, Derby, Derbyshire DE24 8BJ (GB); Donovan, Simon, Derby, Derbyshire DE24 8BJ (GB)
(74) Representative: Rolls-Royce plc

(56) References cited:
- EP-A1- 2 818 645
- EP-A1- 3 002 417
- US-A- 4 618 152
- US-A- 6 155 778
- US-A1- 2012 219 401

## Description

### Field of the Disclosure

The present disclosure relates to a sealing element for positioning radially outwardly of the aerofoil blades of a gas turbine engine, together with a method of manufacturing the same.

### Background to the Disclosure

In a gas turbine engine, some of the aerofoil blades and in particular the turbine blades are conventionally surrounded by a sealing structure, which may comprise an annular seal or a seal segment ring made up of a plurality of arc shaped seal segments. During operation of the engine, the turbine blades expand and contract as their temperatures vary and centrifugal loads are imposed upon them. As a consequence, it is normal to provide a small clearance between the turbine blade tips and the seal surface, in order to allow for this variation in blade length.

It is known to provide an abradable seal for sealing between the turbine blade tips and the sealing structure. This enables the tips of the turbine blades to wear away the seal to an optimum size and shape without causing damage to the turbine blade tips. Such abradable seals may consist of an open cell foil honeycomb which is brazed in place and subsequently filled with a suitable abradable material, such as a metallic powder. It is also known to directly machine, perhaps by electro discharge machining (EDM), a sealing segment made from an oxidation resistant alloy to form a honeycomb structure that is also filled with a suitable abradable material, such as a metallic powder. In both cases the honeycomb acts as a support for the abradable material. The supporting honeycomb is subsequently partially worn away by the rotating turbine blades, thus forming a seal.

Certain problems are associated with the above sealing structures. The seals may suffer from progressive oxidation attack if the foil material has inadequate oxidation resistance. In addition, problems may be experienced with the brazed joints, and the seals may be difficult to cool.

Further problems may arise when the honeycomb structure has worn and needs to be refurbished. Sealing structures produced by vacuum brazing thin foil honeycomb structures to a sealing segment are conventionally refurbished by machining away the remains of the worn honeycomb material and re-attaching a portion of new honeycomb material using vacuum brazing. The brazing quality may be adequate for low temperature applications, but at elevated temperatures the brazing will lose its integrity and fail, thereby limiting this technique to low temperature applications.

Where abradable portions have been machined from a solid sealing segment it is required to replace the seal segment in its entirety, thereby adding to the overall cost of the refurbishment process.

EP 3 002 417 A1 discloses a sealing element for positioning radially outwardly of aerofoil blades of a gas turbine engine. A radially inner surface region of the sealing element includes a seal structure having one or more inwardly projecting walls formed by additive layer, powder fed, laser weld deposition. The walls form a plurality of curved profile shapes which are arranged in a repeating pattern across the radially inner surface region. None of the walls intersects with any other wall. The curved profile shapes have no radii of curvature less than 0.5 mm.

### Statements of Disclosure

According to a first aspect of the present invention there is provided an abradable sealing element for positioning radially outwardly of a plurality of aerofoil blades of a gas turbine engine, the abradable sealing element comprising:
a radially inwardly facing surface region; and
a plurality of cooling holes,
the radially inwardly facing surface region comprising a wall structure, the wall structure having one or more radially inwardly projecting walls formed by additive layer, powder fed, laser weld deposition;
wherein each of the inwardly projecting walls is continuous and defines a plurality of repeating units arranged circumferentially around the radially inwardly facing surface region, each repeating unit being open at a radially inwardly facing side of the sealing element, each repeating unit comprises a plurality of curved portions forming a multi-lobed profile shape, and each cooling hole is provided in the radially inwardly facing surface region at a position within the multi-lobed profile shape,
characterised in that a plurality of tubular guard walls is provided in the radially inwardly facing surface region and extending radially inwardly thereof, each guard wall being positioned at a position concentric with a corresponding one of the or each cooling holes and spaced from the wall structure.

By forming each repeating unit with a multi-lobed profile shape, the abradable sealing element has an increased perimetric length of inwardly projecting wall. This in turn increases the degree of abrasion that can be accommodated by the sealing element before maintenance or repair is required.

The multi-lobed profile of each repeating unit also increases the structural rigidity of the sealing element structure, which in turn increases its effectiveness at sealing against the plurality of aerofoil blades.

The guard wall surrounding each of the cooling holes prevents debris and/or wear particles from accumulating around the cooling holes, and which might otherwise restrict or block the hole.

The tubular geometry of the guard walls corresponds to the cross-sectional profile of the cooling holes. In other words, the guard wall has the same cross-sectional geometry as the cooling hole. This has the effect of moving the exit aperture of a cooling flow through the cooling holes to the radially outward surface of the abradable sealing element.

Optionally, a cooling hole is provided in each of the plurality of multi-lobed profile shapes.

Providing a cooling hole within each of the multi-lobed profile shapes enables a cooling air flow to pass over the walls of the profile shape to keep the walls cool.

The provision of a cooling air flow into the region enclosed by the multi-lobed profile shape prevents the build-up of debris and/or wear particles within the profile shape.

Optionally, each guard wall is provided with a perforated cover portion at a radially inward end thereof, the perforated cover portion extending completely across the radially inward end.

The perforated cover portion prevents blockage of the cooling hole by blown powder and sinter.

The perforations in the cover portion provide a diffusing action for the cooling flow through the holes during operational use of the sealing element.

Optionally, each guard wall extends radially inwardly from the surface region to a first height.

Each of the guard walls has the same radially inward height as the wall structure, i.e. both the guard walls and the wall structure extend radially inwardly from the surface region to the first height.

This ensures that when the spaces between the wall structure and the guard walls is filled with the abradable material, the cooling holes remain clear, i.e. the guard wall prevents abradable material from entering the cooling holes.

Optionally, the wall structure extends radially inwardly from the surface region to the first height.

By making the guard wall lower than the wall structure, the cooling air flow exhausting from the cooling hole can spill over the edge of the hole and into the centre region of each corresponding multi-lobed shape, even when the aerofoil blades are passing over the radially inwardly surfaces of the wall structure.

Optionally, the walls further form one or more straight line boundaries at one or more edges of the radially inner surface region.

The use of a straight wall boundary enables the wall structure to be more closely packaged into the gas turbine engine. This makes the sealing element more convenient for a user.

Optionally, each of the curved portions has a radius of curvature greater than 0.5mm.

Forming each of the curved portions with a radius of curvature greater than 0.5mm prevents debris and/or wear particles from agglomerating within the multi-lobed profile shape and thereby reducing the effectiveness of the abradable layer. A build-up of debris and/or wear particles within the multi-lobed profile shape can result in increased heat generation due to increased friction and reduced cooling air flow.

Optionally, the wall structure extends continuously from a boundary into a central region of the sealing element, around a plurality of concave and convex arcs and returning to the straight line boundary, the sum of the lengths of the concave arcs being substantially equal to the sum of the length of the convex arcs.

Forming the lengths of the concave arcs to be substantially equal to the sum of the length of the convex arcs provides for a substantially symmetrical wall structure geometry. This in turn makes the sealing element more easily packaged within the available space, and maximises the wall length.

Optionally, the wall returns to the boundary adjacent to the point at which the wall leaves the boundary.

This makes the wall structure more compact and space efficient, and hence more convenient for a user.

Optionally, the walls are configured such that all the additive layers of each multi-lobed profile shape can be formed by moving the laser in a closed-circuit weld deposition path, without any reversal of laser direction, from a weld deposition start point to a weld deposition end point.

Forming each of the additive layers making up the wall structure, in a single pass makes the abradable sealing element easier and quicker to manufacture. Forming each additive layer in a single pass also makes the layer more robust and structurally stronger.

Optionally, the repeating units are bounded solely by the continuous wall and the radially inwardly facing surface of the sealing element.

Optionally, a thickness of the walls reduces towards their radially inwardly facing edges.

Tapering a thickness of the walls in a radially outwardly direction makes the walls structurally more rigid and hence less susceptible to damage.

Optionally, the wall structure extends over substantially the whole of the radially inner surface region of the sealing element.

This increases the area of the sealing element over which the aerofoil blades will sweep and hence increases the sealing efficiency of the sealing element.

Optionally, the spaces between adjacent ones of the repeating units, and the spaces between the wall structure and the guard walls, are filled with an abradable material Filling the spaces between adjacent ones of the repeating units with an abradable material increases the abrasion resistance of the sealing element and hence increase the service life of the sealing element.

Optionally, the radially inwardly facing surface region completely encloses the plurality of aerofoil blades.

In one arrangement of the disclosure, the abradable sealing element is formed in a single piece as a circular ring completely enclosing the plurality of aerofoil blades.

According to a second aspect of the present invention there is provided a seal segment ring for a turbine of a gas turbine engine, wherein the seal segment ring comprises a plurality of circumferentially arranged abradable sealing elements according to the first aspect.

In another arrangement of the disclosure, a seal segment ring is formed from two or more abradable sealing elements, each sealing element being formed with a sector shaped geometry. This arrangement enables multiple smaller components to be used to form a seal segment ring.

This arrangement may be more convenient when the seal segment ring has a large diameter. This arrangement also makes repair and/or overhaul easier and quicker for a user.

According to an aspect of the present disclosure there is provided a gas turbine engine comprising a turbine assembly, the turbine assembly comprising a seal segment ring according to the second aspect of the present invention.

According to a third aspect of the present invention there is provided a method of forming an abradable sealing element according to the first aspect, the method comprising the step of:
forming the wall structure at a radially inwardly facing surface region of the abradable sealing element by additive layer, powder fed, laser weld deposition; and
forming a plurality of cooling holes, each cooling hole being provided in the radially inwardly facing surface region at a position within a respective one of the multi-lobed profile shapes,
characterised in that the method further comprises the steps of:
inserting a scaffold structure into each of the cooling holes; and
forming a plurality of guard walls in the radially inwardly facing surface region, each guard wall being positioned at a position concentric with a corresponding one of the cooling holes, and each guard wall being formed around a corresponding one of the scaffold structures.

The use of a scaffold structure provides mechanical support for features such as tubular walls. A scaffold structure is inserted into each of the cooling holes in the surface region and as the blown powder is deposited onto the surface the scaffold maintains the geometry of the guard wall.

Optionally, the method further comprises the step of:
forming a perforated cover portion completely across a radially inward end of the guard wall.

Forming a perforated cover portion over the radially inward end of the guard wall prevents the ingress of blown powder and sinter which might otherwise block the cooling hole and/or the guard wall structure.

Optionally, the method further comprises the step of:
removing the scaffold structure from each of the cooling holes.

The scaffold structure is formed from a material that is burned out during the sinter cycle.

Optionally, all of the additive layers of each curved profile shape are formed by moving the laser in a closed-circuit weld deposition path, without any reversal of laser direction, from a weld deposition start point to a weld deposition end point.

Other aspects of the disclosure provide devices, methods and systems which include and/or implement some or all of the actions described herein. The illustrative aspects of the disclosure are designed to solve one or more of the problems herein described and/or one or more other problems not discussed.

### Brief Description of the Drawings

There now follows a description of an embodiment of the disclosure, by way of nonlimiting example, with reference being made to the accompanying drawings in which:
Figure 1 shows a schematic part-sectional view of a turbofan gas turbine engine incorporating an abradable sealing element according to an embodiment of the present disclosure;

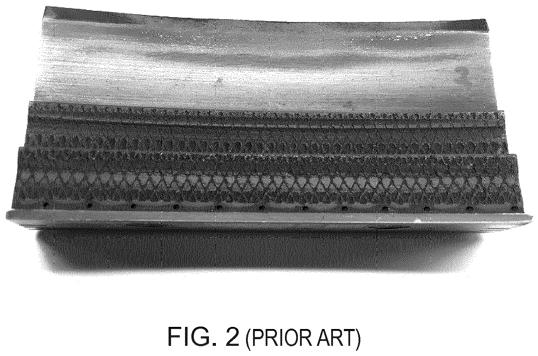

Figure 2 shows a perspective view of an abradable sealing element according to the prior art;
Figure 3 shows a schematic plan view of a wall structure of the abradable sealing element of Figure 1; and
Figure 4 shows a schematic perspective view of the abradable sealing element of Figure 1.

It is noted that the drawings may not be to scale. The drawings are intended to depict only typical aspects of the disclosure, and therefore should not be considered as limiting the scope of the disclosure. In the drawings, like numbering represents like elements between the drawings.

### Detailed Description

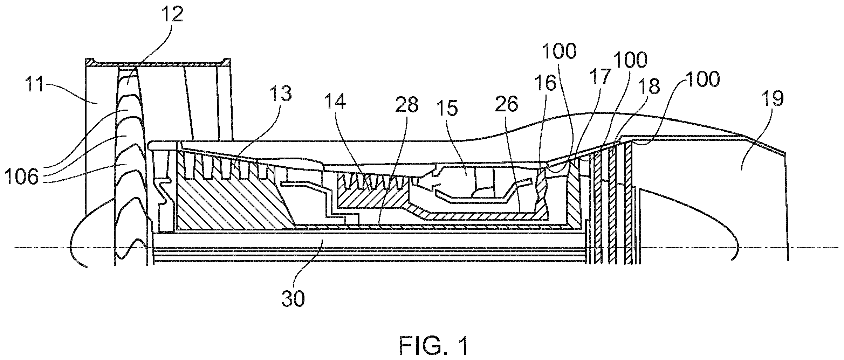

A turbofan gas turbine engine 108, as shown in Figure 1, comprises in flow series an intake 11, a fan 12, an intermediate pressure compressor 13, a high pressure compressor 14, a combustion chamber 15, a high pressure turbine 16, an intermediate pressure turbine 17, a low pressure turbine 18 and an exhaust 19. The fan assembly 12 comprises a plurality of circumferentially arranged aerofoil blades 106. The high pressure turbine 16 is arranged to drive the high pressure compressor 14 via a first shaft 26. The intermediate pressure turbine 17 is arranged to drive the intermediate pressure compressor 13 via a second shaft 28 and the low pressure turbine 18 is arranged to drive the fan 12 via a third shaft 30. In operation air flows into the intake 11 and is compressed by the fan 12. A first portion of the air flows through, and is compressed by, the intermediate pressure compressor 13 and the high pressure compressor 14 and is supplied to the combustion chamber 15. Fuel is injected into the combustion chamber 15 and is burnt in the air to produce hot exhaust gases which flow through, and drive, the high pressure turbine 16, the intermediate pressure turbine 17 and the low pressure turbine 18. The hot exhaust gases leaving the low pressure turbine 18 flow through the exhaust 19 to provide propulsive thrust. A second portion of the air bypasses the main engine to provide propulsive thrust.

Each of the high pressure turbine 16, the intermediate pressure turbine 17 and the low pressure turbine 18, comprises one or more turbine discs. Each turbine disc comprises a plurality of turbine blades enclosed by an abradable sealing element 100. The abradable sealing element provides a light rubbing seal between the radially distal edges of the turbine blades and the turbine housing.

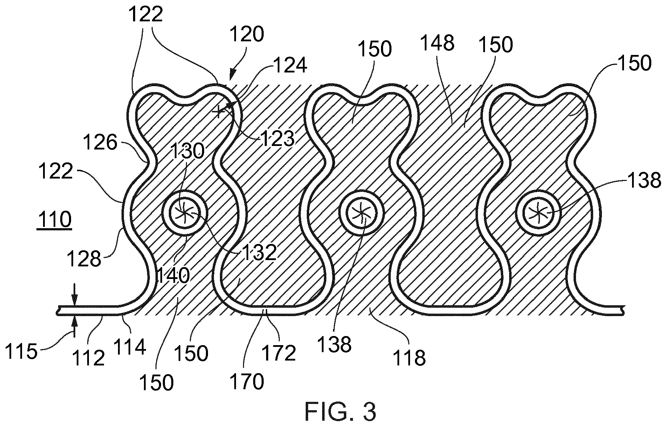

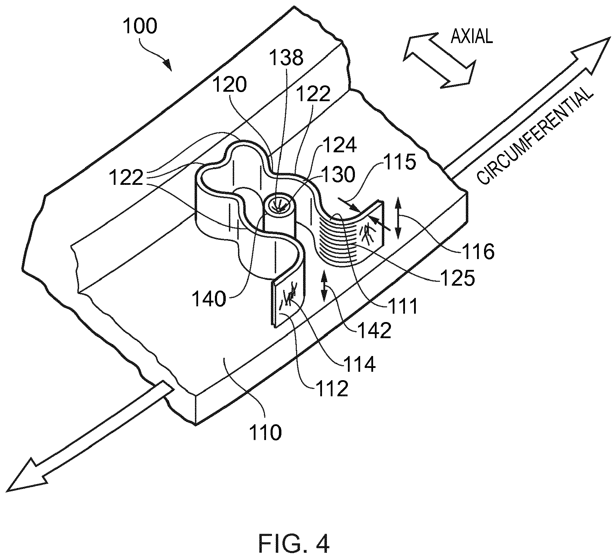

Referring to Figures 3 and 4, an abradable sealing element according to an embodiment of the disclosure is designated generally by the reference numeral 100, the holder
The abradable sealing element 100 comprises a radially inwardly facing surface region 110 and a plurality of cooling holes 130.

In the embodiment shown in Figures 3 and 4, the abradable sealing element 100 is formed as a sector of a larger circular geometry. In other words, several abradable seal elements 100 are positioned together in a circumferentially contiguous arrangement to form a circular seal segment ring.

In other embodiments of the disclosure the abradable sealing element 100 may be formed a unitary circular component.

The radially inwardly facing surface region 110 comprises a wall structure 112. The wall structure 112 has one or more radially inwardly projecting walls 114. The radially inwardly projecting walls 114 are formed by additive layer, powder fed, laser weld deposition. In other words, the radially inwardly projecting walls 114 are formed from a plurality of individual wall layers 125.

The geometry of the radially inwardly projecting walls 114 is such that each additive layer 125 can be formed by moving the laser in a closed-circuit weld deposition path, without any reversal of laser direction, from a weld deposition start point 170 to a weld deposition end point 172.

Each of the inwardly projecting walls 114 is continuous. Each of the inwardly projecting walls 114 has a wall thickness 115. Each of the inwardly projecting walls 114 has a first height 116 in a direction normal to, and extending from, the radially inwardly facing surface 110. Each of the inwardly projecting walls 114 defines a plurality of repeating units 120 arranged circumferentially around the radially inwardly facing surface region 110.

Each of the repeating units 120 is open at a radially inwardly facing side of the surface region 110. Each repeating unit 120 comprises a plurality of curved portions 122 that together form a multi-lobed profile shape 124.

Each of the curved portions 122 has a radius of curvature 123. In the present arrangement the radius of curvature 123 is greater than 0.5mm.

In the present embodiment, the plurality of curved portions 122 comprises a plurality of concave arcs 126 and plurality of convex arcs 128. The plurality of curved portions 122 comprises an alternating arrangement of concave arcs 126 and convex arcs 128. In the present arrangement, the sum of the lengths of the concave arcs 126 is substantially equal to the sum of the length of the convex arcs 128.

Each cooling hole 130 is provided in the radially inwardly facing surface region 110 at a position 132 within the multi-lobed profile shape 124. A cooling hole 130 is provided in each of the plurality of multi-lobed profile shapes 124. In another arrangement, a cooling hole 130 may be provided in alternate ones of the plurality of multi-lobed profile shapes 124.

A guard wall 140 is provided in the radially inwardly facing surface region 110 at a position concentric with a corresponding one of the cooling holes 130. In other words, each cooling hole 130 is provided with a corresponding guard wall 140, with each guard wall 140 being concentric with the corresponding cooling hole 130.

Each guard wall 140 has a second height 142 in a direction normal to, and extending from, the radially inwardly facing surface 110. The second height 142 is equal to the first height 116.

At the start of the process of forming the wall structure 112 and the guard walls 140, a scaffold structure 138 is inserted into each one of the cooling holes 130. The use of scaffold structures 138 provides mechanical support for the deposited material. Such scaffold structures 138 may take many different forms. In this arrangement, the scaffold structure 138 takes the form of a skeletal frame structure.

The multi-lobed profile shape 124 is arranged to extend axially across the radially inwardly facing surface region 110 from a straight line boundary 118. In other words, the straight line boundary 118 lies in a plane normal to an axis of the turbine assembly.

In the present embodiment, the spaces 148 between adjacent ones of the repeating units 120 together with the spaces between the spaces between the wall structure and the guard walls are filled with an abradable material 150. This abradable material 150 extends radially inwardly from the radially inwardly facing surface region 110 to the first height 116. In other words, a radially inwardly facing surface of the abradable material 150 is level with the inwardly projecting walls 114.

After the wall structure 112 and guard walls 140 have been formed and the abradable material 150 deposited, the sealing element 100 is sintered. During the sinter process, the scaffold structure 138 is burned out of the internal volume of the guard wall 140.

Except where mutually exclusive, any of the features may be employed separately or in combination with any other features and the disclosure extends to and includes all combinations and sub-combinations of one or more features described herein.

The foregoing description of various aspects of the disclosure has been presented for purposes of illustration and description. It is not intended to be exhaustive or to limit the disclosure to the precise form disclosed, and obviously, many modifications and variations are possible. Such modifications and variations that may be apparent to a person of skill in the art are included within the scope of the disclosure as defined by the accompanying claims.

## Claims

1. An abradable sealing element (100) for positioning radially outwardly of a plurality of aerofoil blades (106) of a gas turbine engine (108), the abradable sealing element (100) comprising:
a radially inwardly facing surface region (110); and
the radially inwardly facing surface region (110) comprising a wall structure (112), the wall structure (112) having one or more radially inwardly projecting walls (114) formed by additive layer, powder fed, laser weld deposition;
wherein each of the inwardly projecting walls (114) is continuous and defines a plurality of repeating units (120) arranged circumferentially around the radially inwardly facing surface region (110), each repeating unit (120) being open at a radially inwardly facing side of the sealing element (100), each repeating unit (120) comprises a plurality of curved portions (122) forming a multi-lobed profile shape (124), **characterised in that**
the abradable sealing element (100) further comprises a plurality of cooling holes (130), and each cooling hole (130) is provided in the radially inwardly facing surface region (110) at a position within the multi-lobed profile shape (124),
and **in that** a plurality of tubular guard walls (140) is provided in the radially inwardly facing surface region (110) and extending radially inwardly thereof, each guard wall (140) being positioned at a position concentric with a corresponding one of the or each cooling holes (130) and spaced from the wall structure (112).

2. The abradable sealing element (100) as claimed in Claim 1, wherein a cooling hole (130) is provided in each of the plurality of multi-lobed profile shapes (124).

3. The abradable sealing element (100) as claimed in Claim 1, wherein each guard wall (140) is provided with a perforated cover portion at a radially inward end thereof, the perforated cover portion extending completely across the radially inward end.

4. The abradable sealing element as claimed in any one of Claims 1 to 3, wherein the walls (114) further form one or more straight line boundaries (118) at one or more edges of the radially inner surface region (110).

5. The abradable sealing element as claimed in any one of Claims 1 to 4, wherein each of the curved portions (122) has a radius of curvature (123) greater than 0.5mm.

6. The abradable sealing element as claimed in any one of Claims 1 to 5, wherein the wall structure (112) extends continuously from a boundary (118) into a central region of the sealing element (100), around a plurality of concave and convex arcs (126:128) and returning to the straight line boundary (118), the sum of the lengths of the concave arcs (126) being substantially equal to the sum of the length of the convex arcs (128).

7. The abradable sealing element as claimed in Claim 6, wherein the wall (114) returns to the boundary (118) adjacent to the point at which the wall (114) leaves the boundary (118).

8. The abradable sealing element (100) as claimed in any one of Claims 1 to 7, wherein a thickness (115) of the walls (114) reduces towards their radially inwardly facing edges (111).

9. The abradable sealing element (100) as claimed in any one of Claims 1 to 8, wherein the spaces between adjacent ones of the repeating units (120), and the spaces between the wall structure (112) and the guard walls (140), are filled with an abradable material (150).

10. A seal segment ring (160) for a turbine of a gas turbine engine (108), wherein the seal segment ring (160) comprises a plurality of circumferentially arranged abradable sealing elements (100) as claimed in any one of Claims 1 to 9.

11. A method of forming an abradable sealing element (100) as claimed in any one of Claims 1 to 9, the method comprising the steps of:
forming the wall structure (112) at the radially inwardly facing surface region (110) of the abradable sealing element (100) by additive layer, powder fed, laser weld deposition; and
forming the plurality of cooling holes (130), each cooling hole (130) being provided in the radially inwardly facing surface region (110) at a position within a respective one of the multi-lobed profile shapes (124),
inserting a scaffold structure (138) into each of the cooling holes (130); and
forming the plurality of guard walls (140) in the radially inwardly facing surface region (110), each guard wall (140) being positioned at a position concentric with a corresponding one of the cooling holes (130), and each guard wall (140) being formed around a corresponding one of the scaffold structures (138).

12. The method as claimed in Claim 11, the method further comprising the step of:
forming a perforated cover portion completely across a radially inward end of the guard wall (140).

13. The method as claimed in Claim 12, the method further comprising the step of:
removing the scaffold structure (138) from each of the cooling holes (130).

## Patentansprüche

1. Abschabbare Dichtungsstruktur (100) zum radial äußeren Positionieren einer Vielzahl von Stromlinienschaufeln (106) eines Gasturbinenmotors (108), wobei die abschabbare Dichtungsstruktur (100) umfasst:
eine radial nach innen zeigende Oberflächenregion (110);
und wobei die radial nach innen zeigende Oberflächenregion (110) eine Wandstruktur (112) umfasst, wobei die Wandstruktur (112) eine oder mehrere radial nach innen vorstehende Wände (114) aufweist, die durch Laserschweißablagerung mit pulvergespeisten additiven Schichten geformt werden; wobei jede der nach innen vorstehenden Wände (114) durchgängig ist und eine Vielzahl von sich wiederholenden Einheiten (120) definiert, die in Umfangsrichtung um die radial nach innen zeigende Oberflächenregion (110) angeordnet sind, wobei jede sich wiederholende Einheit (120) an einer radial nach innen zeigenden Seite der Dichtungsstruktur (100) offen ist, wobei jede sich wiederholende Einheit (120) eine Vielzahl gekrümmter Abschnitte (122) umfasst, die eine mehrlappige Profilform (124) formen, **dadurch gekennzeichnet, dass** die abschabbare Dichtungsstruktur (100) ferner eine Vielzahl von Kühlungslöchern (130) umfasst und jedes Kühlungsloch (130) in der radial nach innen zeigenden Oberflächenregion (110) an einer Position in der mehrlappigen Profilform (124) bereitgestellt ist und dass eine Vielzahl rohrförmiger Schutzwände (140) in der radial nach innen zeigenden Oberflächenregion (110) bereitgestellt ist und sich radial nach innen davon erstrecken, wobei jede Schutzwand (140) an einer zu einem entsprechenden oder jedem Kühlungsloch (130) konzentrischen Position und beabstandet von der Wandstruktur (112) positioniert ist.

2. Abschabbare Dichtungsstruktur (100) nach Anspruch 1, wobei ein Kühlungsloch (130) in jeder der Vielzahl mehrlappiger Profilformen (124) bereitgestellt ist.

3. Abschabbare Dichtungsstruktur (100) nach Anspruch 1, wobei jede Schutzwand (140) mit einem perforierten Abdeckungsabschnitt an einem radial inneren Ende davon bereitgestellt ist, wobei sich der perforierte Abdeckungsabschnitt vollständig über das radial innere Ende erstreckt.

4. Abschabbare Dichtungsstruktur nach einem der Ansprüche 1 bis 3, wobei die Wände (114) ferner eine oder mehrere geradlinige Grenzen (118) an einer oder mehreren Kanten der radial inneren Oberflächenregion (110) formen.

5. Abschabbare Dichtungsstruktur nach einem der Ansprüche 1 bis 4, wobei jeder der gekrümmten Abschnitte (122) einen Krümmungsradius (123) von mehr als 0,5 mm aufweist.

6. Abschabbare Dichtungsstruktur nach einem der Ansprüche 1 bis 5, wobei sich die Wandstruktur (112) durchgängig von einer Grenze (118) in eine zentrale Region der Dichtungsstruktur (100), um eine Vielzahl konkaver und konvexer Bögen (126:128) erstreckt und zur geradlinigen Grenze (118) zurückkehrt, wobei die Summe der Längen der konkaven Bögen (126) im Wesentlichen gleich der Summe der Länge der konvexen Bögen (128) ist.

7. Abschabbare Dichtungsstruktur nach Anspruch 6, wobei die Wand (114) angrenzend an den Punkt, an dem die Wand (114) die Grenze (118) verlässt, zur Grenze (118) zurückkehrt.

8. Abschabbare Dichtungsstruktur (100) nach einem der Ansprüche 1 bis 7, wobei sich eine Dicke (115) der Wände (114) zu ihren radial nach innen zeigenden Kanten (111) verringert.

9. Abschabbare Dichtungsstruktur (100) nach einem der Ansprüche 1 bis 8, wobei die Räume zwischen angrenzenden der sich wiederholenden Einheiten (120) und die Räume zwischen der Wandstruktur (112) und den Schutzwänden (140) mit einem abschabbaren Material (150) gefüllt sind.

10. Dichtungssegmentring (160) für eine Turbine eines Gasturbinenmotors (108), wobei der Dichtungssegmentring (160) eine Vielzahl von in Umfangsrichtung angeordneten abschabbaren Dichtungselementen (100) nach einem der Ansprüche 1 bis 9 umfasst.

11. Verfahren zum Formen einer abschabbaren Dichtungsstruktur (100) nach einem der Ansprüche 1 bis 9, wobei das Verfahren die folgenden Schritte umfasst:
Formen der Wandstruktur (112) an der radial nach innen zeigenden Oberflächenregion (110) der abschabbaren Dichtungsstruktur (100) durch Laserschweißablagerung mit pulvergespeisten additiven Schichten;
und Formen der Vielzahl von Kühlungslöchern (130), wobei jedes Kühlungsloch (130) in der radial nach innen zeigenden Oberflächenregion (110) an einer Position in einer jeweiligen der mehrlappigen Profilformen (124) bereitgestellt ist, Einführen einer Gerüststruktur (138) in jedes der Kühlungslöcher (130) und Formen der Vielzahl von Schutzwänden (140) in der radial nach innen zeigenden Oberflächenregion (110), wobei jede Schutzwand (140) an einer Position, die konzentrisch zu einem entsprechenden der Kühlungslöcher (130) ist, positioniert ist, und jede Schutzwand (140) um eine entsprechende der Gerüststrukturen (138) geformt ist.

12. Verfahren nach Anspruch 11, ferner umfassend die folgenden Schritte:
Formen eines perforierten Abdeckungsabschnitts vollständig über ein radial inneres Ende der Schutzwand (140).

13. Verfahren nach Anspruch 12, ferner umfassend die folgenden Schritte:
Entfernen der Gerüststruktur (138) aus jedem der Kühlungslöcher (130).

## Revendications

1. Élément d'étanchéité abradable (100) destiné à être positionné radialement vers l'extérieur d'une pluralité d'aubes à profil aérodynamique (106) d'un moteur à turbine à gaz (108), ledit élément d'étanchéité abradable (100) comprenant :
une zone de surface faisant face radialement vers l'intérieur (110) ;
et la zone de surface faisant face radialement vers l'intérieur (110) comprenant une structure de paroi (112), la structure de paroi (112) possédant une ou plusieurs parois faisant saillie radialement vers l'intérieur (114) formées par dépôt de couches additives, alimenté en poudre, soudé par laser ;
chacune des parois faisant saillie vers l'intérieur (114) étant continue et définissant une pluralité d'unités répétitives (120) agencées circonférentiellement autour de la zone de surface faisant face radialement vers l'intérieur (110), chaque unité répétitive (120) étant ouverte au niveau d'un côté faisant face radialement vers l'intérieur de l'élément d'étanchéité (100), chaque unité répétitive (120) comprenant une pluralité de parties incurvées (122) formant une forme de profil à lobes multiples (124), **caractérisé en ce que** l'élément d'étanchéité abradable (100) comprend en outre une pluralité d'orifices de refroidissement (130), et chaque orifice de refroidissement (130) étant disposé dans la zone de surface faisant face radialement vers l'intérieur (110) au niveau d'une position dans la forme de profil à lobes multiples (124) et **en ce qu'**une pluralité de parois de protection tubulaires (140) sont disposées dans la zone de surface faisant face radialement vers l'intérieur (110) et s'étendant radialement vers l'intérieur de celle-ci, chaque paroi de protection (140) étant positionnée au niveau d'une position concentrique avec un orifice de refroidissement correspondant parmi le ou chacun des orifices de refroidissement (130) et espacée de la structure de paroi (112).

2. Élément d'étanchéité abradable (100) selon la revendication 1, un orifice de refroidissement (130) étant disposé dans chacune de la pluralité de formes de profil à lobes multiples (124).

3. Élément d'étanchéité abradable (100) selon la revendication 1, chaque paroi de protection (140) étant dotée d'une partie de couvercle perforée au niveau d'une extrémité radialement vers l'intérieur de celle-ci, ladite partie de couvercle perforée s'étendant complètement à travers l'extrémité radialement vers l'intérieur.

4. Élément d'étanchéité abradable selon l'une quelconque des revendications 1 à 3, lesdites parois (114) formant en outre une ou plusieurs délimitations rectilignes (118) au niveau d'un ou de plusieurs bords de la zone de surface radialement vers l'intérieur (110).

5. Élément d'étanchéité abradable selon l'une quelconque des revendications 1 à 4, chacune des parties incurvées (122) possédant un rayon de courbure (123) supérieur à 0,5 mm.

6. Élément d'étanchéité abradable selon l'une quelconque des revendications 1 à 5, ladite structure de paroi (112) s'étendant de façon continue à partir d'une délimitation (118) dans une zone centrale de l'élément d'étanchéité (100), autour d'une pluralité d'arcs concaves et convexes (126 : 128) et retournant vers la délimitation rectiligne (118), ladite somme des longueurs des arcs concaves (126) étant sensiblement égale à la somme de la longueur des arcs convexes (128).

7. Élément d'étanchéité abradable selon la revendication 6, lesdites parois (114) retournant à la délimitation (118) adjacente au point au niveau duquel la paroi (114) se sépare de la délimitation (118).

8. Élément d'étanchéité abradable (100) selon l'une quelconque des revendications 1 à 7, une épaisseur (115) des parois (114) diminuant vers leurs bords (111) faisant face radialement vers l'intérieur.

9. Élément d'étanchéité abradable (100) selon l'une quelconque des revendications 1 à 8, lesdits espaces entre les unités répétitives adjacentes des unités répétitives (120) et lesdits espaces entre la structure de paroi (112) et les parois de protection (140) étant remplis d'un matériau abradable (150).

10. Anneau de segment d'étanchéité (160) pour une turbine d'un moteur à turbine à gaz (108), ledit anneau de segment d'étanchéité (160) comprenant une pluralité d'éléments d'étanchéité abradables (100) agencés circonférentiellement selon l'une quelconque des revendications 1 à 9.

11. Procédé de formation d'un élément d'étanchéité abradable (100) selon l'une quelconque des revendications 1 à 9, ledit procédé comprenant les étapes de :
formation de la structure de paroi (112) au niveau de la zone de surface (110) faisant face radialement vers l'intérieur de l'élément d'étanchéité abradable (100) par dépôt de couches additives alimenté en poudre soudé par laser ;
et formation de la pluralité d'orifices de refroidissement (130), chaque orifice de refroidissement (130) étant disposé dans la zone de surface faisant face radialement vers l'intérieur (110) au niveau d'une position dans une forme de profil à lobes multiplies respective parmi la pluralité de formes de profil à lobes multiples (124), insertion d'une structure d'échafaudage (138) dans chacun des orifices de refroidissement (130) ; et formation de la pluralité de parois de protection (140) dans la zone de surface faisant face radialement vers l'intérieur (110), chaque paroi de protection (140) étant positionnée au niveau d'une position concentrique avec un orifice de refroidissement correspondant parmi les orifices de refroidissement (130) et chaque paroi de protection (140) étant formée autour d'une structure d'échafaudage correspondante des structures d'échafaudage (138).

12. Procédé selon la revendication 11, ledit procédé comprenant en outre les étapes de :
formation d'une partie de couvercle perforée complètement à travers une extrémité radialement vers l'intérieur de la paroi de protection (140).

13. Procédé selon la revendication 12, ledit procédé comprenant en outre les étapes de :
retrait de la structure d'échafaudage (138) de chacun des orifices de refroidissement (130).
